# EUROPÄISCHE PATENTANMELDUNG

(11) **EP 3 982 492 A1**
(43) Veröffentlichungstag der Anmeldung: **13.04.2022**
(21) Anmeldenummer: 21200972.4
(22) Anmeldetag: 05.10.2021
(51) Int. Cl.: H01R 13/58, H02G 15/007

(54) **GEHÄUSE ZUR SEPARIERUNG VON ELEKTRISCHEN LEITUNGSSTRÄNGEN**

(30) Priorität: 07.10.2020 DE 202020105752 U
(71) Anmelder: Wago Verwaltungsgesellschaft mbH, 32423 Minden (DE)
(72) Erfinder: VISSER, Marcel, 3034 RM Rotterdam (NL); KOOP, Vincent, 6604 GS Wijchen (NL)
(74) Vertreter: Gramm, Lins & Partner Patent- und Rechtsanwälte PartGmbB

(57) **Zusammenfassung**

Die Erfindung betrifft ein Gehäuse zur Separierung von elektrischen Leitungssträngen mit einem Eingangsabschnitt zur Aufnahme von wenigstens zwei elektrischen Leitungssträngen und mit wenigstens einem Ausgangsabschnitt zur Führung der elektrischen Leitungsstränge aus dem Gehäuse. Um ein verbessertes Gehäuse zu schaffen, ist an dem Gehäuse eine Schnittstelle angeordnet, wobei die Schnittstelle dazu eingerichtet ist, das Gehäuse mit einem elektrischen Steckverbinder oder mit einem Steckverbindergehäuse zu verbinden. Durch eine derartige Schnittstelle zu einem Steckverbinder kann es ermöglicht werden, Leitungsstränge zuverlässig zu einem Steckverbinder zu führen und bei mehreren Leitungssträngen diese auch voneinander zu separieren.

## Beschreibung

Die Erfindung betrifft ein Gehäuse zur Separierung von elektrischen Leitungssträngen mit einem Eingangsabschnitt zur Aufnahme von wenigstens zwei elektrischen Leitungssträngen, und mit wenigstens einem Ausgangsabschnitt zur Führung der elektrischen Leitungsstränge aus dem Gehäuse.

Ausgehend hiervon ist es Aufgabe der vorliegenden Erfindung ein verbessertes Gehäuse zu schaffen.

Die Aufgabe wird mit einem Gehäuse mit den Merkmalen des Anspruchs 1 gelöst. Vorteilhafte Ausführungsformen sind in den Unteransprüchen beschrieben.

Bei dem gattungsgemäßen Gehäuse wird vorgeschlagen, dass an dem Gehäuse eine Schnittstelle angeordnet ist, wobei die Schnittstelle dazu eingerichtet ist, das Gehäuse mit einem elektrischen Steckverbinder oder mit einem Steckverbindergehäuse zu verbinden.

Durch eine derartige Schnittstelle zu einem Steckverbinder kann es ermöglicht werden, Leitungsstränge zuverlässig zu einem Steckverbinder zu führen und bei mehreren Leitungssträngen diese auch voneinander zu separieren. Das Gehäuse kann dabei insbesondere mit dem Steckverbindergehäuse über die Schnittstelle verbunden werden. Dabei kann eine Verbindung zum Beispiel mechanisch und/oder elektrisch erfolgen.

Leitungsstränge beinhalten insbesondere eine Vielzahl von elektrischen Leitern. Diese sind gebündelt in einem gemeinsamen Strang geführt, sodass diese unkompliziert verlegt werden können. Am Zielort können die Leitungsstränge entsprechend separiert werden, wobei die Leitungsstränge durch das Gehäuse auch in der Schnittstelle zum Steckverbinder gegen äußere Einflüsse geschützt bleiben.

Unter einer Separierung von elektrischen Leitungssträngen kann in der vorliegenden Anmeldung insbesondere eine räumliche Separierung von elektrischen Leitungssträngen verstanden werden, bei der ausgehend von einem Leiterstrangbündel, in dem die Leitungsstränge aneinander anliegen oder einander lose kontaktieren oder ungeordnet vorliegen, einzelne Leitungsstränge oder Leitungsstranggruppen durch die Separierung räumlich voneinander getrennt, also voneinander beabstandet, und optional in einer vorgegebenen Anordnung oder Reihenfolge aus dem Gehäuse geführt werden. Die Erfindung betrifft somit insbesondere ein Gehäuse zur räumlichen Separierung von in einem Leitungsstrangbündel vorliegenden elektrischen Leitungssträngen mit einem Eingangsabschnitt zur Aufnahme von wenigstens zwei gebündelten elektrischen Leitungssträngen und mit wenigstens einem Ausgangsabschnitt zur räumlich getrennten Führung der mit dem Gehäuse separierten elektrischen Leitungsstränge aus dem Gehäuse.

Unter elektrischen Steckverbindern werden insbesondere elektromechanische Bauteile verstanden, die dem lösbaren Anschluss oder der Verbindung von elektrischen Leitern dienen und durch eine mechanische Verbindung einen elektrischen Kontakt der Leiter miteinander gewährleisten. Ein solcher Steckverbinder kann beispielsweise zur Verbindung mit einem Gegensteckverbinder vorgesehen sein. Elektrische Steckverbinder können beispielsweise der Energieversorgung oder der Signalübertragung dienen und beispielsweise zur Herstellung von elektrischen Verbindungen in Schaltschränken, auf Leiterplatten oder im Leuchtenanschlussbereich eingerichtet sein. Beispielsweise können die elektrischen Steckverbinder Installationssteckverbinder, Leiterplattensteckverbinder, Leuchtensteckverbinder oder Steckverbinder in Reihenklemmen oder Verteilerboxen sein. Die elektrischen Leiter können in dem Steckverbinder beispielsweise mittels Federkraftklemmanschlüssen angeschlossen sein. Der Steckverbinder kann ergänzend feststehende elektrische Kontakte wie beispielsweise Kontaktstifte aufweisen.

Die Schnittstelle kann auf der Gehäuseseite des Eingangsabschnittes oder des Ausgangsabschnittes angeordnet sein. Ferner vorteilhaft kann die Schnittstelle den Eingangsabschnitt oder den Ausgangsabschnitt umgeben.

Die Schnittstelle umschließt den Eingangsabschnitt oder den Ausgangsabschnitt zum Beispiel teilweise oder vollständig. Dabei kann die Schnittstelle am Umfang des Eingangsabschnittes oder Ausgangsabschnittes angeordnet sein.

An der Schnittstelle kann zumindest ein formschlüssiges Kopplungselement zur formschlüssigen Kopplung mit dem elektrischen Steckverbinder angeordnet sein. Auf diese Weise kann eine zuverlässige Schnittstelle zwischen dem Gehäuse und dem Steckverbinder gewährleistet werden. Es ist aber auch eine stoffschlüssige Verbindung denkbar oder eine Kombination aus stoffschlüssiger und formschlüssiger Verbindung.

Der Eingangsabschnitt kann wenigstens eine Eingangsöffnung zur Aufnahme von wenigstens zwei elektrischen Leitungssträngen haben und/oder der Ausgangsabschnitt kann wenigstens eine Ausgangsöffnung zur Führung der elektrischen Leitungsstränge aus dem Gehäuse haben.

Insbesondere ist denkbar, dass das Gehäuse eine Eingangsöffnung hat, wobei die elektrischen Leitungsstränge durch die Eingangsöffnung in das Gehäuse geführt werden können. Vorzugsweise hat das Gehäuse weiterhin zwei Ausgangsöffnungen, wobei die elektrischen Leitungsstränge getrennt voneinander aus diesen Ausgangsöffnungen aus dem Gehäuse geführt werden können.

Es ist aber auch möglich, dass das Gehäuse jeweils zwei Eingangsöffnungen und zwei Ausgangsöffnungen hat, wobei jeweils eine Eingangsöffnung und eine Ausgangsöffnung durch einen Kanal miteinander verbunden sind und jeweils ein Leitungsstrang durch eine Eingangsöffnung zu der mit der Eingangsöffnung verbundenen Ausgangsöffnung geführt werden kann. Die paarweise verbundenen Eingangs- und Ausgangsöffnungen können nebeneinander angeordnet sein, wobei die paarweise verbundenen Eingangs- und Ausgangsöffnungen in einer möglichen Ausführungsform nicht untereinander verbunden ausgebildet sind.

Dabei ist denkbar, dass die Ausgangsöffnungen vorzugsweise rohrförmig ausgebildet sind.

Die Eingangsöffnung und/oder die Ausgangsöffnung kann eine vorgegebene Außen- und/oder Innenkontur haben, wobei die Außen- und/oder Innenkontur eine Kodierung der jeweiligen Eingangsöffnung und/oder Ausgangsöffnung ausbildet.

Durch die Kodierungskontur kann ein Fehlstecken des Gehäuses, insbesondere mit in das Gehäuse eingeführten elektrischen Leitungssträngen, verhindert werden, indem die Kontur der Eingangsöffnung und/oder der Ausgangsöffnung nur in eine entsprechende Negativ-Kontur gesteckt werden kann. Insbesondere kann durch die Kodierung ein Fehlstecken des Gehäuses mit dem Steckverbinder, bzw. mit dem Steckverbindergehäuse, verhindert werden oder zumindest die Wahrscheinlichkeit einer Fehlsteckung verringert werden. Dabei sind auch mehrere Kodierungsmöglichkeiten wie zum Beispiel eine Fase, Ausnehmung oder ein Ausbildung von Vorsprüngen an der Eingangsöffnung und/oder an der Ausgangsöffnung denkbar. Das Gehäuse kann somit zum Beispiel Steckgesichter haben, die nur mit in einer entsprechenden Negativ-Kontur der Steckgesichter zusammenführbar ist.

Weiterhin ist denkbar, dass die Steckgesichter optional, also nachträglich, an den jeweiligen Eingangs- oder Ausgangsöffnungen eingefügt werden können, sodass je nach Anwendungsfall eine individuelle Kodierung ermöglicht werden kann.

Die Eingangsöffnung und/oder die Ausgangsöffnung kann eine runde oder eine eckige Kontur haben. Auf diese Weise können die jeweiligen Öffnungen für einen bestimmten Anwendungsfall ausgebildet sein. Die Ausgestaltung von runden oder eckigen Konturen der Eingangs und/oder Ausgangsöffnung kann insbesondere, aber nicht notwendig, unabhängig von der Kodierung erfolgen. Die runde oder eckige Ausgestaltung kann dabei zum Beispiel die Anschlussart eines Leitungsstranges oder eines Rohres betreffen, indem die Leitungsstränge geführt sind, betreffen.

An dem Gehäuse kann ein Teilungselement angeordnet sein, wobei das Teilungselement dazu eingerichtet ist, die über den Eingangsabschnitt einführbaren elektrischen Leitungsstränge zu separieren und zu dem Ausgangsabschnitt zu führen. Hierbei kann das Teilungselement dazu eingerichtet sein, Leitungsstränge eines Leitungsstrangbündels räumlich voneinander zu separieren und hierdurch den Abstand von Leitungssträngen zueinander zu erhöhen. Das Teilungselement kann dazu vorgesehen sein, ein Leitungsstrangbündel in separiert geführte Leitungsstränge aufzuteilen. Ferner vorteilhaft kann der Ausgangsabschnitt wenigstens zwei Ausgangsöffnungen haben, die jeweils zur Aufnahme wenigstens eines Leitungsstranges ausgebildet sind und wobei das Teilungselement dazu eingerichtet ist, die über den Eingangsabschnitt einführbaren elektrischen Leitungsstränge zu separieren und jeweils zu einer der Ausgangsöffnungen zu führen.

Durch das Teilungselement können die elektrischen Leitungsstränge zum Beispiel voneinander separiert werden und somit zu dem Ausgangsabschnitt geführt werden. Insbesondere kann jeweils ein elektrischer Leitungsstrang zu einer Ausgangsöffnung geführt werden. Die elektrischen Leitungsstränge können so separiert aus dem Gehäuse geführt werden und zum Beispiel in einem Steckverbindergehäuse aufgenommen und angeschlossen werden.

Das Teilungselement kann V-förmig und/oder das Gehäuse Y-förmig ausgebildet sein.

Durch die V-förmige Ausgestaltung des Teilungselementes und/oder die Y-förmige Ausbildung des Gehäuses kann auf einfache konstruktive Weise eine Separierung der elektrischen Leitungsstränge erreicht werden. Beide Ausgestaltungen schließen sich dabei nicht aus und können nebeneinander bestehen. Durch die V-förmige Ausgestaltung wird eine Abzweigstelle, bzw. Gabelung, zum Beispiel innerhalb des Gehäuses erreicht, an welcher die beiden Leitungsstränge separiert zu den jeweiligen Ausgangsöffnungen geführt werden können. Dabei ist denkbar, dass die elektrischen Leitungsstränge nach der Abzweigstelle jeweils in einen Ausgangskanal geführt werden, der sich jeweils an eine Ausgangsöffnung anschließt.

Das Teilungselement kann auch zum Beispiel U-förmig ausgebildet sein, um die Funktion der Separierung der Leitungsstränge zu erreichen.

Das Gehäuse kann einstückig ausgebildet sein. Auf diese Weise kann das erfindungsgemäße Gehäuse kostengünstig hergestellt werden.

Das Gehäuse kann ein erstes Gehäuseteil und ein zweites Gehäuseteil haben. Ferner vorteilhaft kann von dem ersten Gehäuseteil und/oder von dem zweiten Gehäuseteil wenigstens eine Rastlasche abragen, wobei die Rastlasche zur Verrastung mit dem jeweils anderen Gehäuseteil ausgebildet ist.

Durch die zweiteilige Ausbildung des Gehäuses können zunächst die elektrischen Leitungsstränge in das Gehäuse eingeführt werden, um eine einfache Montage der Leitungsstränge zu ermöglichen. Im Anschluss können das erste Gehäuseteil und das zweite Gehäuseteil entsprechend zusammengesteckt werden.

Durch Rastlaschen an dem ersten Gehäuseteil und/oder an dem zweiten Gehäuseteil kann eine Verrastung mit dem jeweils anderen Gehäuseteil erreicht werden.

Dabei ist denkbar, dass eine zweiteilige Ausbildung des Gehäuses auch durch die Ausbildung eines einstückigen Gehäuses erreicht werden kann. Dabei kann zum Beispiel werkseitig ein erstes Gehäuseteil und ein zweites Gehäuseteil bereitgestellt werden, wobei die Gehäuseteile zum Beispiel an den Eingangsabschnitt miteinander, zum Beispiel durch einen Verbindungssteg, verbunden sind und so eine einstückige Ausbildung erreicht werden kann. Dies hat den Vorteil, dass das erste Gehäuseteil und das zweite Gehäuseteil zunächst miteinander verknüpft sind und kein Gehäuseteil vor der Montage verloren gehen kann. Nach der Montage können das erste Gehäuseteil und/oder das zweite Gehäuseteil so umgeklappt werden, dass ein geschlossenes Gehäuse mit einem Eingangsabschnitt und einem Ausgangsabschnitt bereitgestellt werden kann. Nach dem Umklappen ist denkbar, dass die ursprüngliche einstückige Ausbildung, zum Beispiel durch Entfernen des Verbindungssteges gelöst wird und keine einstückige Ausbildung mehr vorliegt.

An dem Eingangsabschnitt kann ein flexibles Schlauchelement angeordnet sein. Auf diese Weise kann das Gehäuse flexibler eingesetzt werden, indem der Eingangsabschnitt durch das flexible Schlauchelement zum Beispiel mit einer die Leitungsstränge beinhaltenden Rohrleitung verbunden werden kann.

An dem Gehäuse kann ein Zugentlastungselement angeordnet sein. Ferner vorteilhaft kann das Zugentlastungselement von dem Ausgangsabschnitt abragen.

Über das Zugentlastungselement kann das Gehäuse zum Beispiel an dem Steckverbinder oder dem Steckverbindergehäuse fixiert werden und gleichzeitig flexible Rohre oder Leitungsstränge aufnehmen, so dass bei Zug auf das Gehäuse nicht die entsprechenden Leitungsstränge beansprucht werden. Insbesondere kann dabei das Zugentlastungselement von dem Ausgangsabschnitt abragen und zum Beispiel mit einem weiteren Gehäuse verbunden werden.

Insbesondere ist vorteilhaft, wenn das Zugentlastungselement mit einem Steckverbinder oder einem Steckverbindergehäuse verbindbar ist. Auf diese Weise kann die Zugentlastung an dem zu verbindenden Steckverbindergehäuse erreicht werden.

An dem Zugentlastungselement kann wenigstens eine Lageröffnung angeordnet sein, wobei die Lageröffnung zur Lagerung an einem korrespondierenden Lagersteg ausgebildet ist.

Über die Lageröffnungen kann das Zugentlastungselement auf konstruktive Weise an einem entsprechenden Lagersteg, der zum Beispiel in einem Steckverbindergehäuse angeordnet ist, gelagert werden, indem der Lagersteg die Lageröffnung durchgreift und das Zugentlastungselement in seiner Position hält.

An dem Zugentlastungselement kann eine Befestigungsöffnung angeordnet sein, wobei das Zugentlastungselement über die Befestigungsöffnung fixierbar ist. Durch die Befestigungsöffnung kann das Zugentlastungselement durch bekannte lösbare Verbindungen fixiert werden, sodass eine zuverlässigere Zugentlastung erreicht werden kann. Eine Fixierung kann dabei zum Beispiel durch eine Schraubverbindung erfolgen, wobei das Gehäuse so durch das Zugentlastungselement an zum Beispiel einem Steckverbindergehäuse fixiert werden kann.

Das Zugentlastungselement kann als Zugentlastungsgehäuse ausgebildet sein oder mit einem Zugentlastungsgehäuse verbindbar ausgebildet sein, wobei das Zugentlastungsgehäuse von dem Ausgangsabschnitt abragt. Ferner vorteilhaft kann das Zugentlastungsgehäuse ein erstes Zugentlastungsgehäuseteil und ein zweites Zugentlastungsgehäuseteil haben.

Durch die Ausbildung eines Zugentlastungsgehäuses kann die Zugentlastung weiter verbessert werden. Dabei ist denkbar, dass das Zugentlastungsgehäuse integraler Bestandteil des erfindungsgemäßen Gehäuses ist. Somit kann die Funktion der Zugentlastung in dem Gehäuse bereitgestellt werden.

Durch die zweiteilige Ausbildung können zunächst die elektrischen Leitungsstränge in das Gehäuse und das Zugentlastungsgehäuse eingeführt werden, um eine einfache Montage der Leitungsstränge zu ermöglichen. Im Anschluss kann das erste Zugentlastungsgehäuseteil und das zweite Zugentlastungsgehäuseteil entsprechend zusammengesteckt werden, um die Zugentlastung zu erreichen.

Dabei ist auch denkbar, dass Rastlaschen an dem ersten Zugentlastungsgehäuseteil und/oder an dem zweiten Zugentlastungsgehäuseteil angeordnet sind und zur Verrastung mit dem jeweils anderen Zugentlastungsgehäuseteil ausgebildet sind.

An dem Eingangsabschnitt und/oder dem Ausgangsabschnitt kann ein Befestigungselement angeordnet sein, wobei das Befestigungselement zur Befestigung wenigstens eines elektrischen Leitungsstranges eingerichtet ist.

Insbesondere ist ein Befestigungselement an der Eingangsöffnung angeordnet, sodass das Befestigungselement beispielsweise eine Verrastung für den elektrischen Leitungsstrang oder eines flexiblen Rohres, wie zum Beispiel ein gewelltes Rohr, in dem zum Beispiel der elektrische Leitungsstrang geführt ist, bereitstellt. Dabei kann das Befestigungselement zum Beispiel als Lasche aus dem Gehäuse herausgeschnitten sein, wobei optional an der zu dem Innenraum gewandten Seite des Gehäuses ein zusätzlicher Rasthaken angeformt sein kann, der in ein Wellental eines gewellten flexiblen Rohres oder in eine sonstige Ausnehmung eines Rohres oder des elektrischen Leitungsstranges eingreift. Die Lasche kann dabei zum Beispiel über einen U-förmigen Ausschnitt aus dem Gehäuse freigeschnitten und zum Innenraum des Gehäuses umgebogen oder angeformt sein.

Ferner betrifft die vorliegende Erfindung eine Anordnung mit einem oben beschriebenen Gehäuse, wobei der Eingangsabschnitt an einer Rohrleitung mit wenigstens zwei elektrischen Leitungssträngen angeordnet ist und/oder dass der Ausgangsabschnitt an einem Steckverbinder oder an einem Steckverbindergehäuse angeordnet ist.

Durch eine derartige Anordnung können die Leitungsstränge der Rohrleitung auf vereinfacht zu dem Steckverbinder geführt werden, wobei zudem die Leitungsstränge separiert werden können. Zudem müssen die Leitungsstränge nicht schutzlos zu dem entsprechenden Steckverbinder geführt werden, sondern sind durch das Gehäuse gegen äußere Einflüsse geschützt.

Der unbestimmte Begriff "ein" ist als solcher und nicht als Zahlwort zu verstehen. So ist auch denkbar, dass das Gehäuse zwei, drei oder eine Vielzahl von Eingangsöffnungen und/oder Ausgangsöffnungen hat.

Die Erfindung wird nachfolgend anhand von Ausführungsbeispielen beispielhaft mit den beigefügten Zeichnungen näher erläutert. Es zeigen:
- Figur 1 -: ein Gehäuse in einer ersten Ausführungsform in einer perspektivischen Ansicht;
- Figur 2 -: ein Gehäuse nach Figur 1 in einer geschnittenen Draufsicht;
- Figur 3a -: ein erstes Gehäuseteil für ein Gehäuse in einer zweiten Ausführungsform in einer perspektivischen Ansicht;
- Figur 3b -: ein zweites Gehäuseteil für ein Gehäuse nach Figur 3a in einer perspektivischen Ansicht;
- Figur 4 -: ein erstes Gehäuseteil und ein zweites Gehäuseteil für ein Gehäuse in einer dritten Ausführungsform in einer perspektivischen Ansicht;
- Figur 5 -: ein Gehäuse in einer vierten Ausführungsform in einer perspektivischen Ansicht;
- Figur 6 -: ein Gehäuse nach Figur 5 mit einem Zugentlastungsgehäuse;
- Figur 7 -: ein Gehäuse in einer fünften Ausführungsform mit einem integrierten Zugentlastungsgehäuse in einer perspektivischen Ansicht;
- Figur 8 -: ein Gehäuse in einer sechsten Ausführungsform in einer perspektivischen Ansicht;
- Figur 9 -: ein Gehäuse nach Figur 8 in einer geschnittenen Draufsicht mit einem eingeführten Leitungsstrang.

In der nachfolgenden Beschreibung der verschiedenen Ausführungsformen werden die gleichen Bezugszeichen für die gleichen baulichen Merkmale verwendet, da die verschiedenen baulichen Ausgestaltungen auch in unterschiedlichen Ausführungsformen zur Anwendung kommen können.

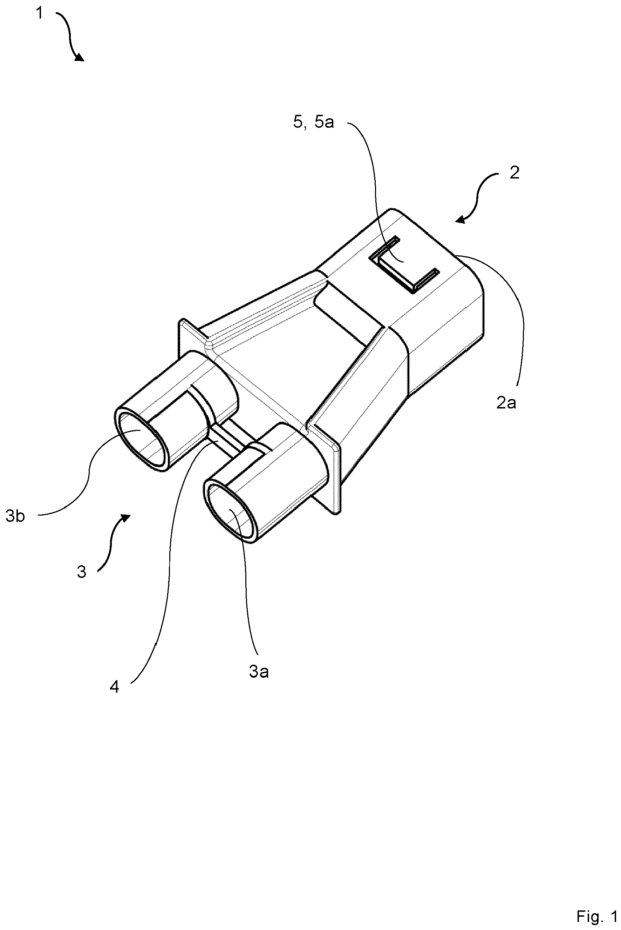

Figur 1 zeigt ein Gehäuse 1 in einer ersten Ausführungsform in einer perspektivischen Ansicht. Das Gehäuse 1 hat einen Eingangsabschnitt 2 zur Aufnahme von wenigstens zwei elektrischen Leitungssträngen, wobei der Eingangsabschnitt 2 eine Eingangsöffnung 2a zum Einführen der Leitungsstränge in das Gehäuse 1 hat. Weiterhin hat das Gehäuse 1 einen Ausgangsabschnitt 3, wobei der Ausgangsabschnitt 3 eine erste Ausgangsöffnung 3a und eine zweite Ausgangsöffnung 3b hat. Das Gehäuse 1 ist dabei einstückig ausgebildet. Das Gehäuse 1 kann bevorzugt als ein durch ein Spritzgießverfahren gefertigtes Bauteil aus Kunststoff ausgebildet sein.

Deutlich wird, dass die elektrischen Leitungsstränge durch die Eingangsöffnung 2a des Eingangsabschnittes 2 durch das Gehäuse 1 zu den Ausgangsöffnungen 3a, 3b des Ausgangsabschnittes 3 geführt werden können. Dabei werden die elektrischen Leitungsstränge separiert, sodass jeweils ein Leitungsstrang aus einer der Ausgangsöffnungen 3a, 3b heraustreten kann.

Weiterhin deutlich wird, dass die Ausgangsöffnungen 3a, 3b rohrförmig, bzw. rund, und die Eingangsöffnung 2a eckig ausgebildet sind.

Das Gehäuse 1 hat eine Schnittstelle 4, wobei die Schnittstelle 4 dazu eingerichtet ist, das Gehäuse 1 mit einem elektrischen Steckverbinder zu verbinden. Die Schnittstelle 4 ist dabei als Steg zwischen den Ausgangsöffnungen 3a, 3b ausgebildet und kann zum Beispiel als formschlüssiges Kopplungselement mit einem elektrischen Steckverbinder formschlüssig verbunden werden. So kann auf einfache Weise ein Gehäuse 1 bereitgestellt werden, das elektrische Leitungsstrenge separiert und zu einem Steckverbinder führt.

Deutlich wird dabei, dass die Schnittstelle 4 auf der Seite des Gehäuses 1 des Ausgangsabschnittes 3 angeordnet ist. Es ist aber auch denkbar, dass die Schnittstelle 4 zum Beispiel auf der Seite des Gehäuses 1 des Eingangsabschnittes 2 anordbar ist.

Zu erkennen ist, dass an dem Eingangsabschnitt 2 ein Befestigungselement 5 angeordnet ist, wobei das Befestigungselement 5 zur Befestigung wenigstens eines elektrischen Leitungsstranges oder eines flexiblen Rohres, wie zum Beispiel ein Wellrohr, eingerichtet ist.

Dabei ist das Befestigungselement 5 zum Beispiel als Lasche 5a ausgebildet, die aus dem Gehäuse 1 herausgeschnitten ist, wobei optional an der zu dem Innenraum gewandten Seite des Gehäuses 1 ein zusätzlicher Rasthaken angeformt sein kann, der in ein Wellental eines gewellten flexiblen Rohres oder in eine sonstige Ausnehmung eines Rohres oder des elektrischen Leitungsstranges eingreift. Die Lasche 5a kann dabei zum Beispiel über einen U-förmigen Ausschnitt aus dem Gehäuse 1 freigeschnitten und zum Innenraum des Gehäuses 1 umgebogen oder ausgeformt sein.

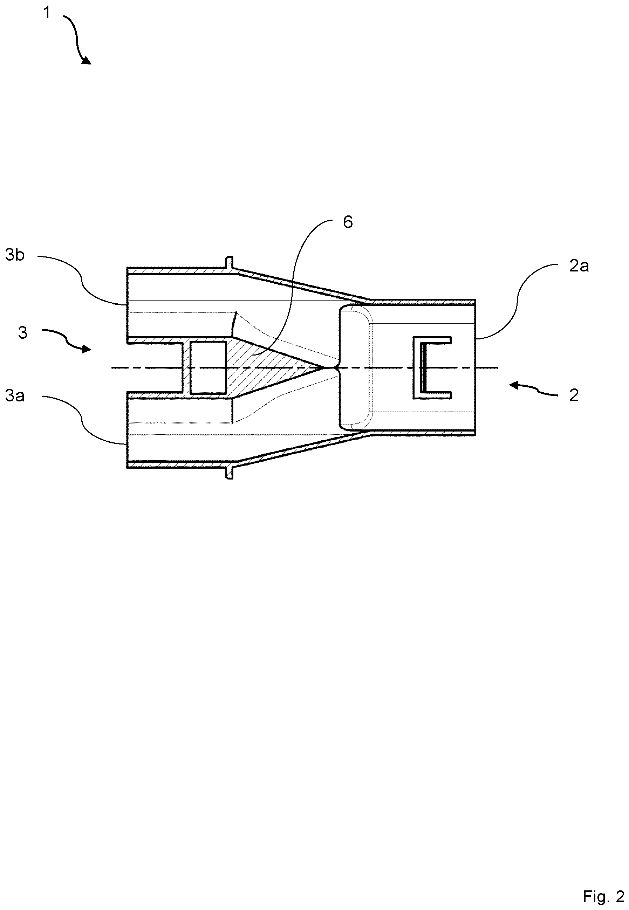

Figur 2 zeigt ein Gehäuse 1 nach Figur 1 in einer geschnittenen Draufsicht. Zu erkennen ist, dass an dem Gehäuse ein Teilungselement 6 angeordnet ist, wobei das Teilungselement 6 dazu eingerichtet ist, die an dem Eingangsabschnitt 2 eingeführten elektrischen Leitungsstränge zu separieren und jeweils einen Leitungsstrang zu den Ausgangsöffnungen 3a, 3b des Ausgangsabschnittes 3 zu führen. Dabei ist das Teilungselement 6 V-förmig als ein integraler Bestandteil des Gehäuses 1 ausgebildet, wobei gleichzeitig das Gehäuse 1 Y-förmig ausgebildet ist. So können zwei Leitungsstränge, die in die Eingangsöffnung 2a eingeführt werden, separiert und jeweils zu einer der Ausgangsöffnungen 3a, 3b durch das Gehäuse 1 geführt werden.

Das Innere des Gehäuses 1 ist dabei derartig dimensioniert, dass zwei eingeführte Leitungsstränge nebeneinander durch die Eingangsöffnung 2a eingeführt werden können, wobei die Leitungsstränge durch das spitz zulaufende Teilungselement 6 voneinander getrennt und zu der jeweiligen Ausgangsöffnung 3a, 3b geführt werden.

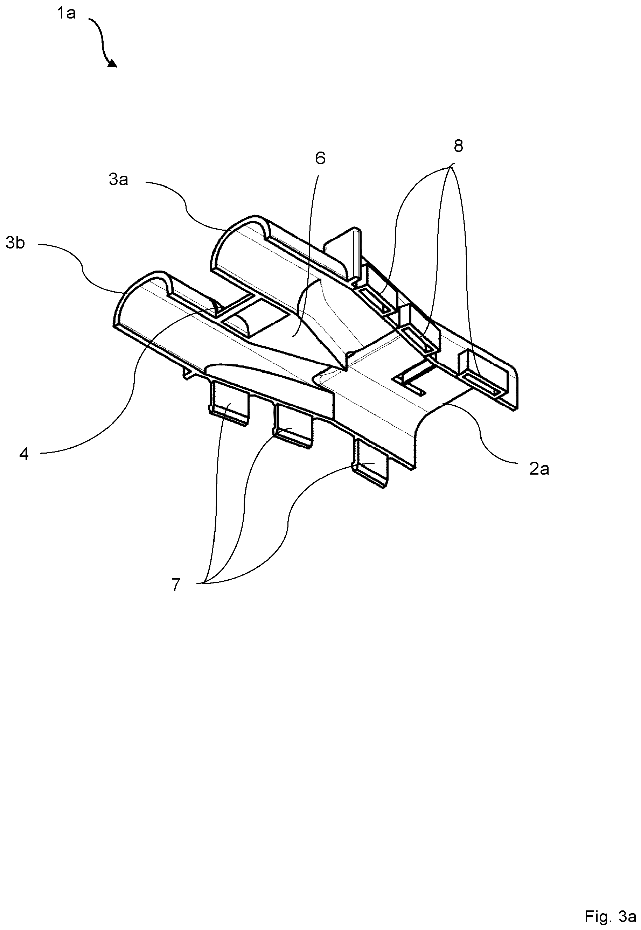

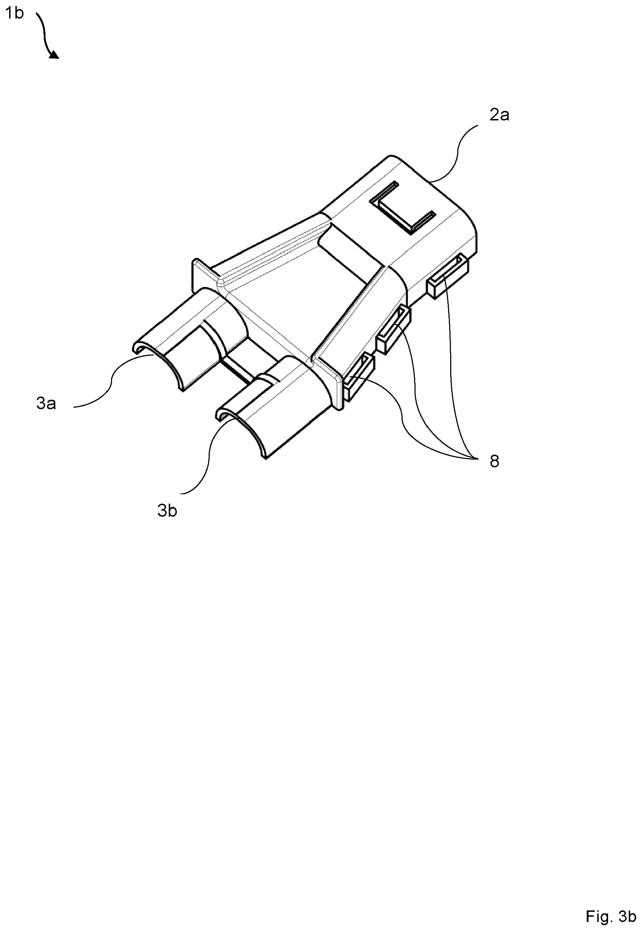

Figur 3a und 3b zeigen ein erstes Gehäuseteil 1a und ein zweites Gehäuseteil 1b für ein Gehäuse 1 in einer zweiten Ausführungsform in einer perspektivischen Ansicht. Das erste Gehäuseteil 1a und das zweite Gehäuseteil 1b können zusammengesetzt werden und bilden damit das erfindungsgemäße Gehäuse 1, das baulich der ersten Ausführungsform nach den Figuren 1 und 2 entspricht.

Deutlich wird, dass sowohl an dem ersten Gehäuseteil 1a und an dem zweiten Gehäuseteil 1b Rastlaschen 7 angeordnet sind, wobei die Rastlaschen 7 in eine korrespondierende Rastöffnung 8 des jeweils anderen Gehäuseteils 1a, 1b eingreifen können. Auf diese Weise können das erste Gehäuseteil 1a und das zweite Gehäuseteil 1b zuverlässig miteinander verbunden und verrastet werden.

Durch die zweiteilige Ausbildung des Gehäuses 1 können die Leitungsstränge vereinfacht in das Gehäuse 1 eingesetzt werden, wobei anschließend das erste Gehäuseteil 1a und das zweite Gehäuseteil 1b miteinander verrastet werden.

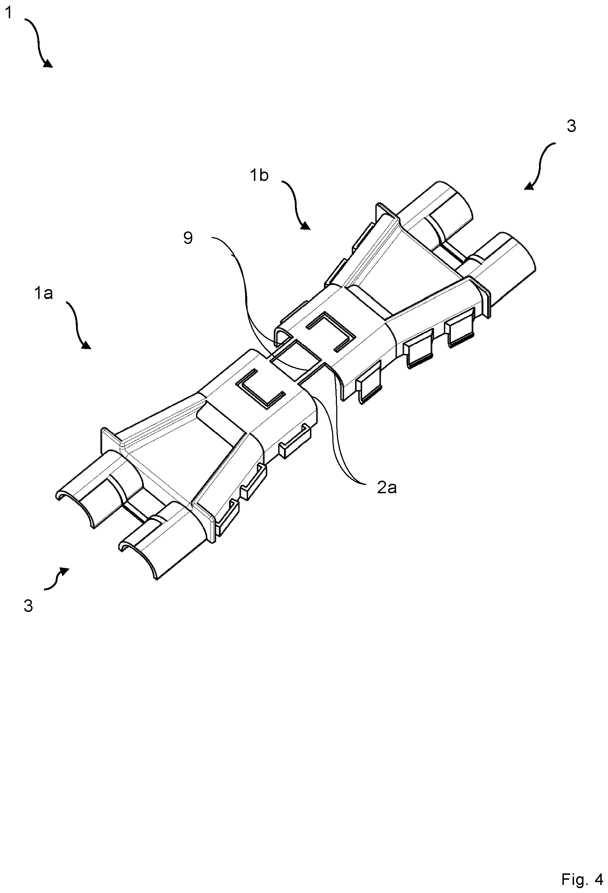

Figur 4 zeigt ein erstes Gehäuseteil 1a und ein zweites Gehäuseteil 1b für ein Gehäuse 1 in einer dritten Ausführungsform in einer perspektivischen Ansicht. Die dritte Ausführungsform unterscheidet sich von der zweiten Ausführungsform nach den Figuren 3a und 3b dahingehend, dass das erste Gehäuseteil 1a und das zweite Gehäuseteil 1b an der Eingangsöffnung 2a über einen Verbindungssteg 9 miteinander verbunden sind. Das erste Gehäuseteil 1a und das zweite Gehäuseteil 1b sind somit einstückig, beispielsweise durch einen Spritzgießprozess, ausgebildet.

Dies hat den Vorteil, dass das erste Gehäuseteil 1a und das zweite Gehäuseteil 1b zunächst miteinander verknüpft sind und keines der Gehäuseteile 1a, 1b vor der Montage verloren gehen kann. Nach dem Anordnen der Leitungsstränge in einem der Gehäuseteile können das erste Gehäuseteil 1a und/oder das zweite Gehäuseteil 1b so umgeklappt werden, dass ein geschlossenes Gehäuse 1 mit einem Eingangsabschnitt 2 und einem Ausgangsabschnitt 3 bereitgestellt werden kann. Nach dem Umklappen ist denkbar, dass die ursprüngliche einstückige Ausbildung, zum Beispiel durch Entfernen des Verbindungssteges 9 gelöst wird und keine einstückige Ausbildung mehr vorliegt.

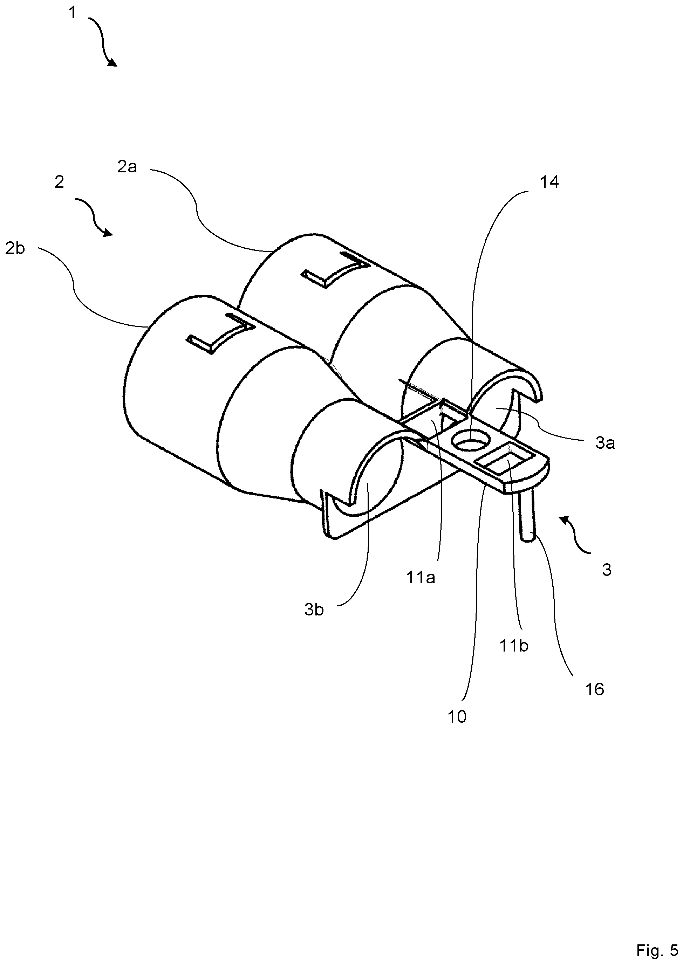

Figur 5 zeigt ein Gehäuse 1 in einer vierten Ausführungsform in einer perspektivischen Ansicht. Das Gehäuse 1 hat einen Eingangsabschnitt 2 zur Aufnahme von wenigstens zwei elektrischen Leitungssträngen, wobei der Eingangsabschnitt 2 zwei Eingangsöffnungen 2a, 2b zum Einführen der Leitungsstränge in das Gehäuse 1 hat. Dabei ist jeweils ein Leitungsstrang in eine der Eingangsöffnungen 2a, 2b einführbar. Weiterhin hat das Gehäuse 1 einen Ausgangsabschnitt 3, wobei der Ausgangsabschnitt 3 eine erste Ausgangsöffnung 3a und eine zweite Ausgangsöffnung 3b hat. Das Gehäuse 1 ist dabei einstückig ausgebildet.

Deutlich wird, dass die elektrischen Leitungsstränge durch die Eingangsöffnungen 2a, 2b des Eingangsabschnittes 2 durch das Gehäuse 1 zu den Ausgangsöffnungen 3a, 3b des Ausgangsabschnittes 3 geführt werden können. Dabei ist die Eingangsöffnung 2a mit der Ausgangsöffnung 3b und die Eingangsöffnung 2b mit der Ausgangsöffnung 3b durch das Gehäuse kanalartig verbunden, wobei die jeweiligen Verbindungskanäle zwischen den Eingangsöffnungen 2a, 2b und den Ausgangsöffnungen 3a, 3b getrennt voneinander ausgebildet sind. Das heißt, dass jeweils ein Leitungsstrang in einem eigenen Verbindungskanal geführt werden kann. Die Leitungsstränge werden bereits beim Einführen in die Eingangsöffnungen 2a, 2b voneinander separiert.

Weiterhin deutlich wird, dass die Eingangsöffnungen 2a, 2b und die Ausgangsöffnungen 3a, 3b rohrförmig, bzw. rund, ausgebildet sind.

Zu erkennen ist, dass von dem Ausgangsabschnitt 3 des Gehäuses 1 ein Zugentlastungselement 10 abragt, wobei das Zugentlastungselement 10 zwischen der ersten Ausgangsöffnung 3a und der zweiten Ausgangsöffnung 3b an dem Gehäuse 1 angeordnet ist. Durch das Zugentlastungselement 10 kann das Gehäuse 1 in der Endeinbaulage, beispielsweise an einem Steckverbindergehäuse, fixiert werden. So kann bei Ausübung einer Zugkraft auf das Gehäuse 1 der Steckverbinder oder die Bauteile des Steckverbinders wie zum Beispiel der Kontaktrahmen oder die Klemmfeder entlastet werden.

Das Zugentlastungselement 10 hat dabei eine erste Lageröffnung 11a und eine zweite Lageröffnung 11b, wobei die Lageröffnungen 11a, 11b zur Lagerung an korrespondierenden Lagerstegen 12a, 12b, zum Beispiel eines Steckverbindergehäuses, ausgebildet sind.

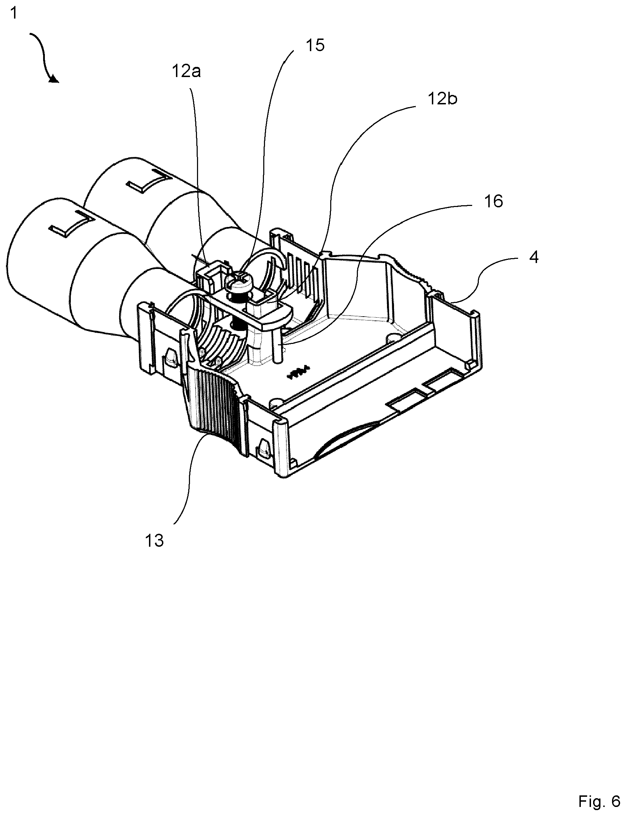

Figur 6 zeigt ein Gehäuse 1 nach Figur 5 mit einem Zugentlastungsgehäuse 13, wobei das Gehäuse 1 nach Figur 5 über das Zugentlastungselement 10 an dem Zugentlastungsgehäuse 13 angeordnet ist. Dabei greifen die Lagerstege 12a, 12b des Zugentlastungsgehäuses 13 in die korrespondierenden Lageröffnungen 11a, 11b des Zugentlastungselementes. Das Zugentlastungselement 10 kann über eine Befestigungsöffnung 14 mit zum Beispiel einer Schraube 15 an dem Zugentlastungsgehäuse 13 fixiert werden.

Deutlich wird, dass die Lageröffnungen 11a, 11b in Längserstreckungsrichtung des Zugentlastungselementes 10 hintereinander angeordnet sind, wobei die Befestigungsöffnung 14 zwischen den Lageröffnungen 11a, 11b angeordnet ist. Zur Stützung des Zugentlastungselementes 10 ragt von dem freien Ende ein Steg 16 ab, wobei das Zugentlastungselement 10 im montierten Zustand von dem Steg 16 abgestützt wird, um auf das Zugentlastungselement 10 wirkende Hebelkräfte zu verringern und so eine Beschädigung zu vermeiden.

In der Ausführungsform nach den Figuren 5 und 6 ist die Schnittstelle 4 zur Verbindung mit einem Steckerbinder, bzw. Steckverbindergehäuse, am Zugentlastungsgehäuse 13 angeordnet. Es ist aber auch denkbar, dass die Schnittstelle 4 direkt am Gehäuse 1 angeordnet ist.

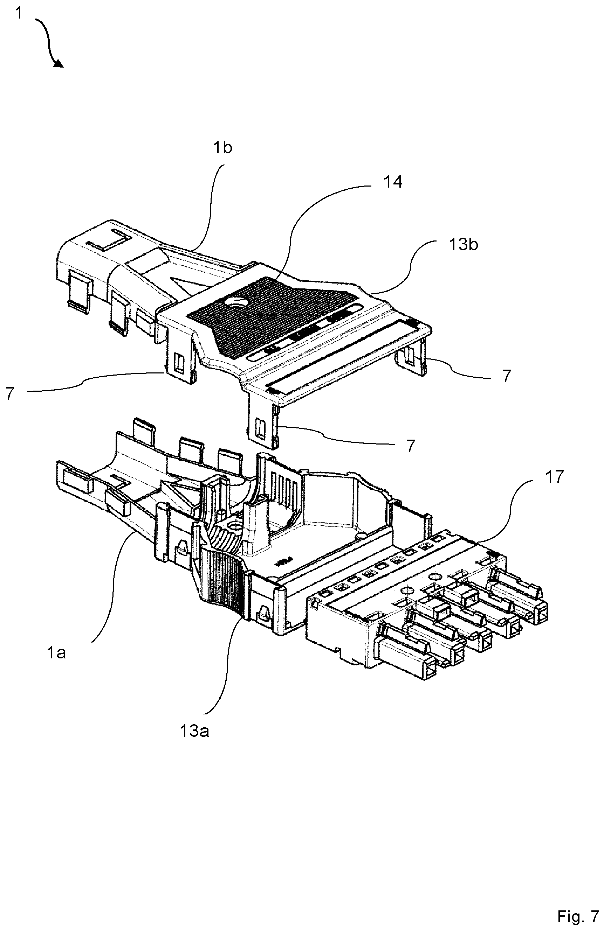

Figur 7 zeigt ein Gehäuse 1 in einer fünften Ausführungsform mit einem integrierten Zugentlastungsgehäuse 13 in einer perspektivischen Ansicht. Das Zugentlastungsgehäuse 13 hat dabei ein erstes Zugentlastungsgehäuseteil 13a und ein zweites Zugentlastungsgehäuseteil 13b, wobei das erste Zugentlastungsgehäuseteil 13a am ersten Gehäuseteil 1a und das zweite Zugentlastungsgehäuseteil 13b am zweiten Gehäuseteil 1b angeordnet ist. Deutlich wird, dass das Zugentlastungsgehäuse 13 die Funktion des Zugentlastungselementes 10 integriert, indem das erste Zugentlastungsgehäuseteil 13a über eine Befestigungsöffnung 14 an dem zweiten Zugentlastungsgehäuseteil 13b fixiert werden kann. Dabei kann das erste Zugentlastungsgehäuseteil 13a über Rastlaschen 7 an dem zweiten Zugentlastungsgehäuseteil 13b verrastet werden.

Das Zugentlastungsgehäuse 13, bzw. das Zugentlastungselement 10, ist somit integraler Bestandteil des Gehäuses 1 und kann über die Schnittstelle 4 mit einem Steckverbinder 17, bzw. Steckverbindergehäuse, verbunden werden. Alternativ kann das Zugentlastungsgehäuseteil 13 mit dem ersten Gehäuseteil 1a und das Zugentlastungsgehäuseteil 13b mit dem zweiten Gehäuseteil 1b jeweils einstückig ausgeformt sein, beispielsweise mittels eines Kunststoff-Spritzgießverfahrens. Der Steckverbinder 17 kann dabei formschlüssig über formschlüssige Kopplungselemente mit dem Gehäuse 1 verbunden werden.

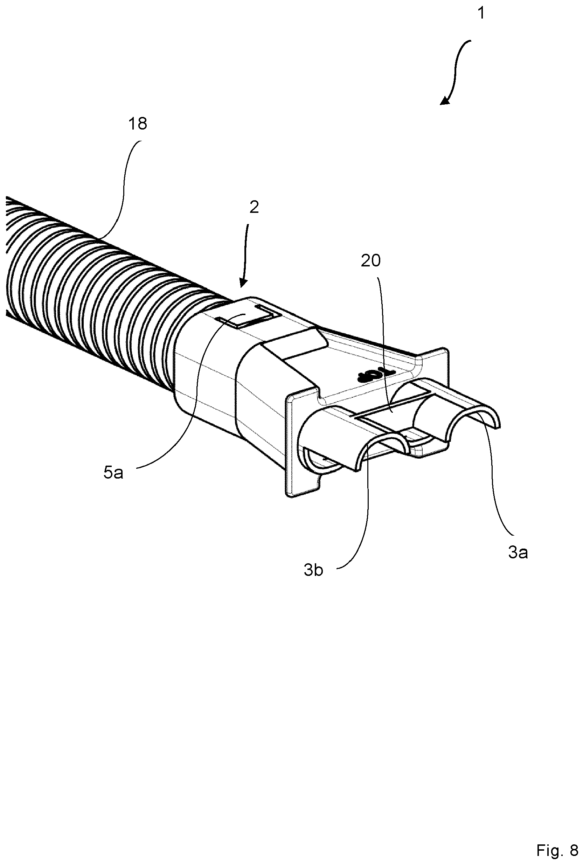

Figur 8 zeigt ein Gehäuse 1 in einer sechsten Ausführungsform in einer perspektivischen Ansicht. Das Gehäuse 1 ist dabei ähnlich der ersten Ausführungsform nach den Figuren 1 und 2 ausgebildet. Der Unterschied zur ersten Ausführungsform besteht darin, dass die erste Ausgangsöffnung 3a und die zweite Ausgangsöffnung 3b rohrförmig, aber nicht im Umfang geschlossen ausgebildet sind. Die erste Ausgangsöffnung 3a und die zweite Ausgangsöffnung 3b bilden zumindest in einem Querschnitt eine halbkreisförmige Kontur. Durch die halbkreisförmige Kontur der Ausgangsöffnungen 3a, 3b kann gegenüber der ersten Ausführungsform bei gleichbleibender Funktionalität Material gespart und somit die Herstellungskosten gesenkt werden. Die beiden halbkeisförmigen Konturen sind über einen zwischen den halbkreisförmigen Konturen angeordneten Verbindungssteg 20 beispielsweise einstückig miteinander verbunden, wodurch die Stabilität der halbkreisförmigen Konturen verbessert wird.

Deutlich wird weiterhin, dass an dem Eingangsabschnitt 2 ein flexibles Schlauchelement 18 angeordnet ist, wobei das flexible Schlauchelement 18 über die Lasche 5a mit dem Gehäuse 1 verbunden ist. In dem flexiblen Schlauchelement 18 können zum Beispiel die Leitungsstränge geführt werden.

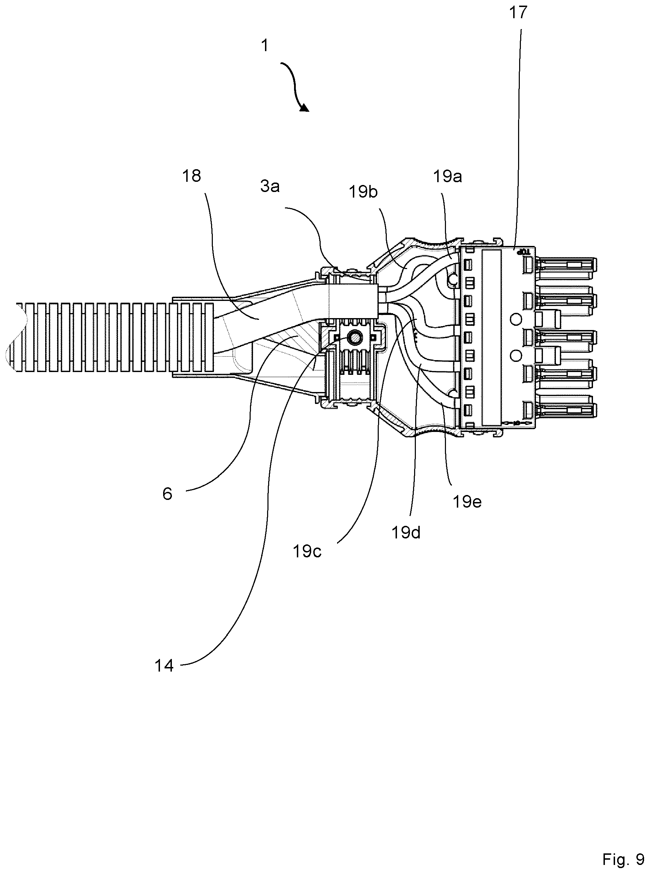

Figur 9 zeigt ein Gehäuse 1 nach Figur 8 in einer geschnittenen Draufsicht mit einem eingeführten Leitungsstrang 19, wobei innerhalb des Leitungsstranges 19 eine Vielzahl von elektrischen Leiter 19a, 19b, 19c, 19d, 19e geführt sind, die jeweils mit dem Steckverbinder 17 elektrisch leitend verbunden sind. Der Leitungsstrang 19 wird dabei durch das V-förmige Teilungselement 6 zur ersten Ausgangsöffnung 3a geführt. Das Gehäuse 1 kann dabei über die Befestigungsöffnung 14 eines Zugentlastungselementes oder Zugentlastungsgehäuses (nicht dargestellt) fixiert werden, wodurch bei Zug auf das Gehäuse 1 die entsprechende Kraft auf den Leitungsstrang 18, bzw. die elektrischen Leiter 19a bis 19e, nicht oder zumindest vermindert übertragen wird.

Damit kann der entsprechende Leitungssträng 18 oder auch weitere Leitungsstränge, bzw. die elektrischen Leiter 19a bis 19e, entlastet und die Wahrscheinlichkeit einer Beschädigung zumindest verringert oder verhindert werden.

### Bezugszeichenliste

- 1: Gehäuse
- 1a: Erstes Gehäuseteil
- 1b: Zweites Gehäuseteil
- 2: Eingangsabschnitt
- 2a: Erste Eingangsöffnung
- 2b: Zweite Eingangsöffnung
- 3: Ausgansabschnitt
- 3a: Erste Ausgangsöffnung
- 3b: Zweite Ausgangsöffnung
- 4: Schnittstelle
- 5: Befestigungselement
- 5a: Lasche
- 6: Teilungselement
- 7: Rastlasche
- 8: Rastöffnung
- 9: Verbindungssteg
- 10: Zugentlastungselement
- 11a, 11b: Lageröffnung
- 12a, 12b: Lagersteg
- 13: Zugentlastungsgehäuse
- 14: Befestigungsöffnung
- 15: Schraube
- 16: Steg
- 17: Steckverbinder
- 18: Flexibles Schlauchelement
- 19: Leitungsstrang
- 19a bis 19e: Elektrische Leiter
- 20: Verbindungssteg

## Patentansprüche

1. Gehäuse (1) zur Separierung von elektrischen Leitungssträngen (19) mit einem Eingangsabschnitt (2) zur Aufnahme von wenigstens zwei elektrischen Leitungssträngen (19), und mit wenigstens einem Ausgangsabschnitt (3) zur Führung der elektrischen Leitungsstränge (19) aus dem Gehäuse (1),
**dadurch gekennzeichnet, dass**
an dem Gehäuse (1) eine Schnittstelle (4) angeordnet ist, wobei die Schnittstelle (4) dazu eingerichtet ist, das Gehäuse (1) mit einem elektrischen Steckverbinder (17) oder mit einem Steckverbindergehäuse zu verbinden.

2. Gehäuse (1) nach Anspruch 1, **dadurch gekennzeichnet, dass** die Schnittstelle (4) auf der Gehäuseseite des Eingangsabschnittes (2) oder des Ausgangsabschnittes (3) angeordnet ist.

3. Gehäuse (1) nach einem der vorhergehenden Ansprüche, **dadurch gekennzeichnet, dass** die Schnittstelle (4) den Eingangsabschnitt (2) oder den Ausgangsabschnitt (3) umgibt.

4. Gehäuse (1) nach einem der vorhergehenden Ansprüche, **dadurch gekennzeichnet, dass** an der Schnittstelle (4) zumindest ein formschlüssiges Kopplungselement zur formschlüssigen Kopplung mit dem elektrischen Steckverbinder (17) angeordnet ist.

5. Gehäuse (1) nach einem der vorhergehenden Ansprüche, **dadurch gekennzeichnet, dass** der Eingangsabschnitt (2) wenigstens eine Eingangsöffnung (2a, 2b) zur Aufnahme von wenigstens zwei elektrischen Leitungssträngen (19) hat und/oder der Ausgangsabschnitt (3) wenigstens eine Ausgangsöffnung (2a, 2b) zur Führung der elektrischen Leitungsstränge (19) aus dem Gehäuse (1) hat.

6. Gehäuse (1) nach Anspruch 5, **dadurch gekennzeichnet, dass** die Eingangsöffnung (2a, 2b) und/oder die Ausgangsöffnung (3a, 3b) eine vorgegebene Außen- und/oder Innenkontur haben, wobei die Außen- und/oder Innenkontur eine Kodierung der jeweiligen Eingangsöffnung (2a, 2b) und/oder Ausgangsöffnung (3a, 3b) ausbildet.

7. Gehäuse (1) nach einem der Ansprüche 5 oder 6, **dadurch gekennzeichnet, dass** die Eingangsöffnung (2a, 2b) und/oder die Ausgangsöffnung (3a, 3b) eine runde oder eine eckige Kontur hat.

8. Gehäuse (1) nach einem der vorhergehenden Ansprüche, **dadurch gekennzeichnet, dass** an dem Gehäuse (1) ein Teilungselement (6) angeordnet ist, wobei das Teilungselement (6) dazu eingerichtet ist, die über den Eingangsabschnitt (2) einführbaren elektrischen Leitungsstränge (19) zu separieren und zu dem Ausgangsabschnitt (3) zu führen.

9. Gehäuse (1) nach Anspruch 8, **dadurch gekennzeichnet, dass** der Ausgangsabschnitt (3) wenigstens zwei Ausgangsöffnungen (3a, 3b) hat, die jeweils zur Aufnahme wenigstens eines Leitungsstranges (19) ausgebildet sind und wobei das Teilungselement (6) dazu eingerichtet ist, die über den Eingangsabschnitt (2) einführbaren elektrischen Leitungsstränge (19) zu separieren und jeweils zu einer der Ausgangsöffnungen (3a, 3b) zu führen.

10. Gehäuse (1) nach einem der Ansprüche 8 oder 9, **dadurch gekennzeichnet, dass** das Teilungselement (6) V-förmig und/oder das Gehäuse (1) Y-förmig ausgebildet ist.

11. Gehäuse (1) nach einem der vorhergehenden Ansprüchen, **dadurch gekennzeichnet, dass** das Gehäuse (1) einstückig ausgebildet ist.

12. Gehäuse (1) nach einem der vorhergehenden Ansprüche, **dadurch gekennzeichnet, dass** das Gehäuse (1) ein erstes Gehäuseteil (1a) und ein zweites Gehäuseteil (1b) hat.

13. Gehäuse (1) nach Anspruch 12, **dadurch gekennzeichnet, dass** von dem ersten Gehäuseteil (1a) und/oder von dem zweiten Gehäuseteil (1b) wenigstens eine Rastlasche (7) abragt, wobei die Rastlasche (7) zur Verrastung mit dem jeweils anderen Gehäuseteil (1a, 1b) ausgebildet ist.

14. Gehäuse (1) nach einem der vorhergehenden Ansprüche, **dadurch gekennzeichnet, dass** an dem Eingangsabschnitt (2) ein flexibles Schlauchelement (18) angeordnet ist.

15. Gehäuse (1) nach einem der vorhergehenden Ansprüche, **dadurch gekennzeichnet, dass** an dem Gehäuse (1) ein Zugentlastungselement (10) angeordnet ist.

16. Gehäuse (1) nach Anspruch 15, **dadurch gekennzeichnet, dass** das Zugentlastungselement (10) von dem Ausgangsabschnitt (3) abragt.

17. Gehäuse (1) nach Anspruch 15 oder 16, **dadurch gekennzeichnet, dass** das Zugentlastungselement (10) mit einem Steckverbinder (17) oder einem Steckverbindergehäuse verbindbar ist.

18. Gehäuse (1) nach einem der Ansprüche 15 bis 17, **dadurch gekennzeichnet, dass** an dem Zugentlastungselement (10) wenigstens eine Lageröffnung (11a, 11b) angeordnet ist, wobei die Lageröffnung (11a, 11b) zur Lagerung an einem korrespondierenden Lagersteg (12a, 12b) ausgebildet ist.

19. Gehäuse (1) nach einem der Anspruche 15 bis 18, **dadurch gekennzeichnet, dass** an dem Zugentlastungselement (10) eine Befestigungsöffnung (14) angeordnet sein, wobei das Zugentlastungselement (10) über die Befestigungsöffnung (14) fixierbar ist.

20. Gehäuse (1) nach einem der Ansprüche 15 bis 19, **dadurch gekennzeichnet, dass** das Zugentlastungselement (10) als Zugentlastungsgehäuse (13) oder mit einem Zugentlastungsgehäuse (13) verbindbar ausgebildet ist, wobei das Zugentlastungsgehäuse (13) von dem Ausgangsabschnitt (3) abragt.

21. Gehäuse (1) nach Anspruch 20, **dadurch gekennzeichnet, dass** das Zugentlastungsgehäuse (13) ein erstes Zugentlastungsgehäuseteil und ein zweites Zugentlastungsgehäuseteil hat.

22. Gehäuse (1) nach einem der vorhergehenden Ansprüche. **dadurch gekennzeichnet, dass** an dem Eingangsabschnitt (2) und/oder dem Ausgangsabschnitt (3) ein Befestigungselement (5) angeordnet ist, wobei das Befestigungselement (5) zur Befestigung wenigstens eines elektrischen Leitungsstranges (19) eingerichtet ist.

23. Anordnung mit einem Gehäuse (1) nach einem der vorhergehenden Ansprüche, **dadurch gekennzeichnet, dass** der Eingangsabschnitt (2) an einer Rohrleitung mit wenigstens zwei elektrischen Leitungssträngen (19) angeordnet ist und/oder dass der Ausgangsabschnitt (3) an einem Steckverbinder (17) oder an einem Steckverbindergehäuse angeordnet ist.
